# EUROPEAN PATENT APPLICATION

(11) **EP 4 297 150 A1**
(43) Date of publication of application: **27.12.2023**
(21) Application number: 22831800.2
(22) Date of filing: 22.06.2022
(51) Int. Cl.: H01M 10/613, H01M 10/625

(54) **BOX BODY OF POWER BATTERY, POWER BATTERY, ELECTRIC DEVICE, AND TEMPERATURE DIFFERENCE SELF-ADJUSTING COLD PLATE**

(30) Priority: 30.06.2021 CN 202121480283 U
(71) Applicant: BYD Company Limited, Shenzhen, Guangdong 518118 (CN)
(72) Inventor: TANG, Jianglong, Shenzhen, Guangdong 518118 (CN); GUO, Shu, Shenzhen, Guangdong 518118 (CN); LU, Peng, Shenzhen, Guangdong 518118 (CN); LI, Xin, Shenzhen, Guangdong 518118 (CN)
(74) Representative: Arnold & Siedsma
(86) International application number: PCT/CN2022/100425
(87) International publication number: WO 2023/273983

(57) **Abstract**

A power battery has a box. The box includes a tray, a liquid cooling plate, and a cold expansion portion. An accommodating space for accommodating cells is provided in the tray. The liquid cooling plate is connected to the tray at an outer surface of at least one of the top and bottom of the tray. A flow channel through which a cooling liquid flows is defined jointly by the liquid cooling plate and the outer surface of the tray. The cold expansion portion is arranged in the flow channel, and is connected to at least one of the tray and the liquid cooling plate. A liquid-passing cross-sectional area of the flow channel corresponding to an expansion region is reduced when the cold expansion portion expands.

## Description

### CROSS-REFERENCE TO RELATED APPLICATIONS

The present disclosure claims priority to and benefits of Chinese Patent Application No. 202121480283.6, filed on June 30, 2021. The entire content of the above-referenced applications is incorporated herein by reference.

### FIELD

The present disclosure relates to the technical field of cell core cooling, and more specifically, to a box of a power battery, a power battery, a power consuming device, and a temperature difference self-adjusting cooling plate.

### BACKGROUND

In the related art, a power battery pack includes multiple single cells. As the performances of the cells are different, environmental temperatures of the cells are also different. Since some cells have high usage temperatures, the consistency of the cells is bad, and even the battery pack may be discharged due to the high usage temperature of these cells, which affects the usage performance of batteries.

### SUMMARY

The present disclosure provides a box of a power battery. The box can adjust a flow rate of a cooling liquid according to usage conditions of cells.

To achieve the above object, the present disclosure provides a box of a power battery, including: a tray, a liquid cooling plate, and a cold expansion portion. An accommodating space for accommodating cells is provided in the tray. The liquid cooling plate is connected to the tray at an outer surface of at least one of the top and bottom of the tray. A flow channel through which a cooling liquid flows is defined jointly by the liquid cooling plate and the outer surface of the tray. In addition, the cold expansion portion is arranged in the flow channel, and connected to at least one of the tray and the liquid cooling plate. A liquid-passing cross-sectional area of the flow channel corresponding to an expansion region is reduced when the cold expansion portion expands.

The present disclosure further provides a power battery. The above-mentioned box of the power battery is arranged in the power battery.

The present disclosure further provides a power consuming device, including the above-mentioned power battery.

The present disclosure further provides a temperature difference self-adjusting cooling plate.

In the box of the power battery according to the present disclosure, since the liquid cooling plate is arranged on the tray, the cold expansion portion arranged in the liquid cooling plate can adjust a liquid-passing cross-sectional area of the flow channel on the liquid cooling plate. When the temperature of a cell core is high, more cooling liquid flows through the flow channel. When the temperature of the cell core is low, the cold expansion portion expands to reduce the liquid-passing cross-sectional area of the flow channel, so that the flow rate of the corresponding cooling liquid can be reduced, thereby increasing the flow rate of the cooling liquid at the other cells, reducing the usage temperatures of the other cells, and improving the usage performance of the battery core.

In some embodiments, an inner cavity is formed in the liquid cooling plate. The side of the inner cavity facing the tray is open. The surface of the tray closes the open side of the inner cavity. A region of the liquid cooling plate not provided with the inner cavity is connected to the surface of the tray. The cold expansion portion is connected to the inner cavity of the liquid cooling plate.

In some embodiments, the cold expansion portion is a coating printed or coated on the inner cavity of the liquid cooling plate.

In some embodiments, the inner cavity of the liquid cooling plate includes an inner side wall and an inner top wall opposite to the tray. The cold expansion portion is at least arranged on the inner top wall.

In some embodiments, when the cells are in a non-operating state, an initial thickness of the cold expansion portion is 0.1 mm to 0.5 mm.

In some embodiments, a distribution area of the cold expansion portion is 40% to 60% of an entire area of the liquid cooling plate.

In some embodiments, a volume variation of the cold expansion portion is 1 to 10 times.

In some embodiments, the cold expansion portion is made of a foam material.

In some embodiments, a cold expansion coefficient of the cold expansion portion is 100% to 500%.

In some embodiments, the tray is an integral extrusion type structure. The liquid cooling plate is a stamped aluminum alloy plate.

The power battery according to an embodiment of the present disclosure includes a box of a power battery according to an embodiment of the present disclosure.

The power consuming device according to an embodiment of the present disclosure includes a power battery according to an embodiment of the present disclosure. The power battery is configured to supply power to the power consuming device.

A temperature difference self-adjusting cooling plate according to an embodiment of the present disclosure is configured for thermal management of a power battery, which includes: a liquid cooling plate and a cold expansion portion. An inner cavity is formed in the liquid cooling plate. One side of the inner cavity is open, and the open side is configured to connect a tray of the power battery. The cold expansion portion is fixed with the liquid cooling plate in the inner cavity, and the thickness of the cold expansion portion is changeable with temperature in the presence of a temperature difference of the corresponding liquid cooling plate, so as to adjust the size of a cooling liquid passing space of a local region in the inner cavity.

In some embodiments, the cold expansion portion is a coating arranged on an inner top wall of the inner cavity.

Other features and advantages of the present disclosure will be described in detail in the following detailed description part.

### BRIEF DESCRIPTION OF THE DRAWINGS

The accompanying drawings are intended to provide further understanding of the present disclosure and constitute a part of this specification. The accompanying drawings and the detailed description below are used together for explaining the present disclosure rather than constituting a limitation to the present disclosure. In the accompanying drawings:
FIG. 1 is a structural schematic diagram of a box according to an embodiment of the present disclosure;
FIG. 2 is another structural schematic diagram of a box according to an embodiment of the present disclosure;
FIG. 3 is yet another structural schematic diagram of a box according to an embodiment of the present disclosure;
FIG. 4 is a structural schematic diagram of a region A in FIG. 3;
FIG. 5 is another structural schematic diagram of a region A in FIG. 3;
FIG. 6 is a schematic diagram of a power battery according to an embodiment of the present disclosure; and
FIG. 7 is a schematic diagram of a power consuming device according to an embodiment of the present disclosure.

### DETAILED DESCRIPTION

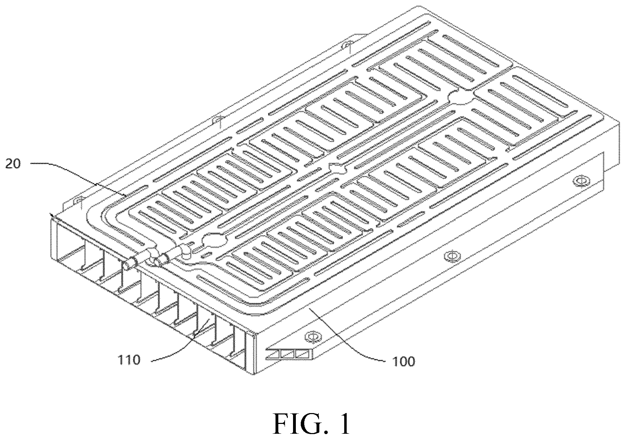

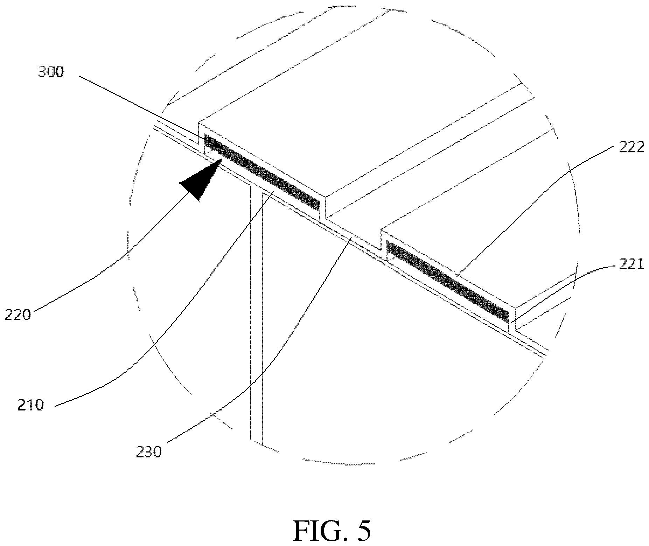

The embodiments of the present disclosure are described in detail below, and the embodiments described with reference to the accompanying drawings are exemplary. A box 10 of a power battery 30 is disclosed with reference to FIG. 1 to FIG. 5. The box 10 includes a tray 100, a liquid cooling plate 200, and a cold expansion portion 300.

Specifically, an accommodating space 110 for accommodating cells is provided in the tray 100. The liquid cooling plate 200 is connected to the tray 100 at an outer surface of at least one of the top and bottom of the tray 100. A flow channel 210 through which a cooling liquid flows is defined jointly by the liquid cooling plate 200 and the outer surface of the tray 100. In addition, the cold expansion portion 300 is arranged in the flow channel 210, and connected to at least one of the tray 100 and the liquid cooling plate 200. A liquid-passing cross-sectional area of the flow channel 210 corresponding to an expansion region is reduced when the cold expansion portion 300 expands.

It can be understood that the tray 100 is suitable for mounting cells, so that the cells are safer and more reliable to use, and the service lives of the cells are prolonged. The liquid cooling plate 200 is arranged on the top surface or the bottom surface of the tray 100. The liquid cooling plate 200 can absorb heat of the cells. The liquid cooling plate 200 is suitable for improving the usage environments of the cells, prolonging the service lives of the cells, and improving the usage performances of the cells.

In detail, the flow channel 210 through which the cooling liquid flows is arranged between the liquid cooling plate 200 and the tray 100. The cooling liquid absorbs the heat of the cells and flows to other parts during the flowing process, so that the usage environment temperatures of the cells are lower, and the usage performances of the cells can be better improved.

Furthermore, the cold expansion portion 300 is arranged in the flow channel 210 defined between the liquid cooling plate 200 and the tray 100. The cold expansion portion 300 contracts or keeps a low thickness when the temperature of the cooling liquid flowing in the flow channel 210 is high, so that the liquid-passing cross-sectional area of the cooling liquid in the flow channel 210 is large, and the flow flux of the cooling liquid is large. Thus, the liquid cooling plate 200 can better reduce the temperatures of the cells, while the cold expansion portion 300 expands when the temperature of the cooling liquid is low, so that the liquid-passing cross-sectional area in the flow channel 210 is reduced, thereby reducing the flow flux of the cooling liquid, and increasing the flow rate of the cooling liquid at other parts.

In the box 10 of the power battery 30 according to an embodiment of the present disclosure, since the liquid cooling plate 200 is arranged on the tray 100, the cold expansion portion 300 arranged in the liquid cooling plate 200 can adjust the liquid-passing cross-sectional area of the flow channel 210 on the liquid cooling plate 200. When the temperature of a cell core is high, more cooling liquid flows through the flow channel 210. When the temperature of the cell core is low, the cold expansion portion 300 expands to reduce the liquid-passing cross-sectional area of the flow channel 210, so that the flow rate of the corresponding cooling liquid can be reduced, thereby increasing the flow rate of the cooling liquid at the other cells, reducing the usage temperatures of the other cells, and improving the usage performance of the battery core.

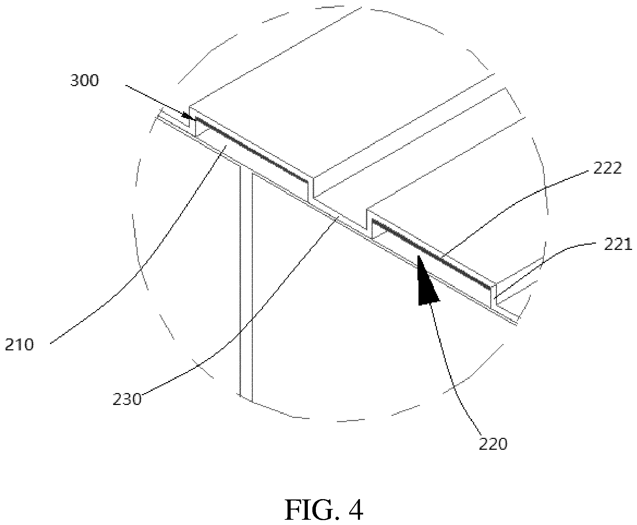

In some embodiments, as shown in FIG. 4, an inner cavity 220 is formed in the liquid cooling plate 200. The side of the inner cavity 220 facing the tray 100 is open. The surface of the tray 100 closes the open side of the inner cavity 220. A region 230 of the liquid cooling plate 200 not provided with the inner cavity 220 is connected to the surface of the tray 100. The cold expansion portion 300 is connected to the inner cavity 220 of the liquid cooling plate 200. In this way, the inner cavity 220 is provided in the liquid cooling plate 200, so that the cold expansion portion 300 can be arranged in the inner cavity 220. The cold expansion portion 300 can be provided more simply and reliably, so that the cold expansion portion 300 can better adjust the liquid-passing cross-sectional area in the flow channel 210, the flow rate of the cooling liquid can be adjusted according to the usage conditions of the cells, the cells can be better cooled, and the usage performances of the cells can be improved. Furthermore, since the region 230 of the liquid cooling plate 200 not provided with the inner cavity 220 is connected to the surface of the tray 100, the connection between the liquid cooling plate 200 and the tray 100 is more stable and reliable, so that the cooling liquid flowing in the flow channel 210 can better take away heat generated during the operation of the cells, and the usage performances of the cells are improved.

In some embodiments, the cold expansion portion 300 is a coating printed or coated on the inner cavity 220 of the liquid cooling plate 200. Thus, the coating facilitates the arrangement of the cold expansion portion 300 and improves the assembly efficiency of the box 10. The coating is arranged on the inner cavity 220 of the liquid cooling plate 200, so that the arrangement of the coating is more stable, and the cold expansion portion 300 can better adjust the liquid-passing cross-sectional area of the flow channel 210. Also, the coating is arranged by printing or coating, so that the arrangement efficiency of the coating is higher. In addition, the connection between the coating and the inner cavity 220 is more stable, so that the cold expansion portion 300 can better adjust the liquid-passing cross-sectional area in the flow channel.

In some embodiments, the inner cavity 220 of the liquid cooling plate 200 includes an inner side wall 221 and an inner top wall 222 opposite to the tray 100. The cold expansion portion 300 is at least arranged on the inner top wall 222. In this way, the cold expansion portion 300 is arranged on the inner top wall 222, so that the cold expansion portion 300 can adjust the liquid-passing cross-sectional area above the flow channel 210, and the cooling liquid flows more smoothly.

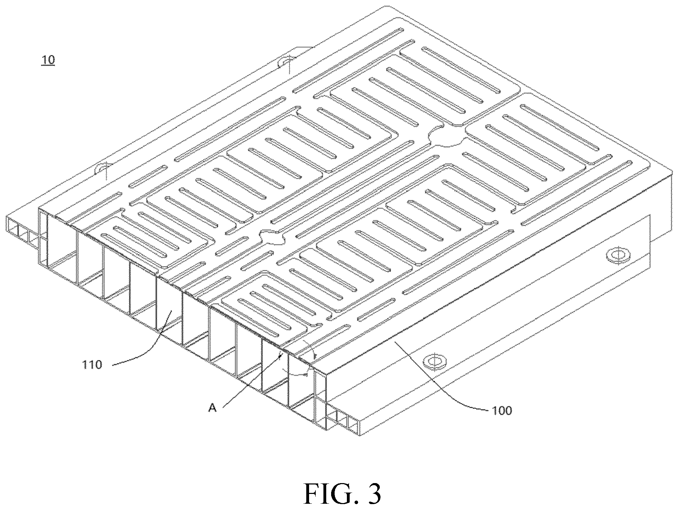

As shown in FIG. 3 to FIG. 5, in some embodiments, when the cells are in a non-operating state, an initial thickness of the cold expansion portion 300 is 0.1 mm to 0.5 mm, or a distribution area of the cold expansion portion 300 is 40% to 60% of an entire area of the liquid cooling plate 200. It can be understood that the thickness of the cold expansion portion 300 has a large change range, and the minimum thickness is an arrangement thickness of the coating, that is, 0.1 mm. In the case of the maximum thickness, the cold expansion portion 300 can block the flow channel 210, and the cooling liquid cannot pass through the flow channel 210, and more cooling liquid flows through the other cells, thereby improving the usage performance of the whole cell.

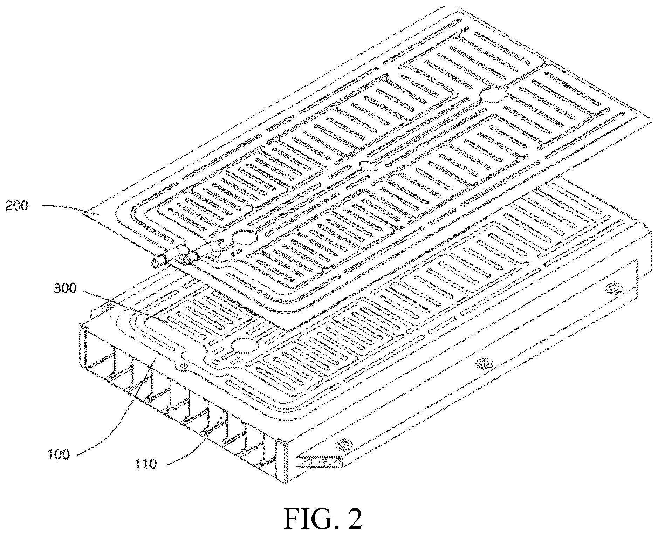

In some embodiments, as shown in FIG. 2, the tray 100 may be an integrally extruded tray 100 made of an aluminum alloy and has a flat upper surface. In this way, the production efficiency of the tray 100 can be high, and the liquid cooling plate 200 may be a stamped aluminum alloy plate. The design of the flow channel 210 between the liquid cooling plate 200 and the tray 100 can be realized by stamping, so that the structural stability of the flow channel 210 can be improved, and the cooling liquid can better flow in the flow channel 210. Furthermore, the liquid cooling plate 200 and the tray 100 are bonded by over-furnace brazing to form a stamped brazed cooling plate with a flat lower surface and the flow channel 210 on an upper surface (as shown in FIG. 1). The initial thickness of the cold expansion portion 300 is 0.1 mm to 0.5 mm, and a volume variation may be 1 to 10 times. The ratio of the design area of the flow channel 210 of different cooling plates to the entire area of the liquid cooling plate 200 is about 40 to 60%. When there is a temperature difference caused by the charging and discharging conditions of the battery, the cold expansion portion 300 in a low-temperature region automatically expands according to the temperature difference, and extrudes a cavity height of the flow channel 210 in the range of 1 mm to 5 mm. By extruding the cavity height, the liquid-passing cross-sectional area of the corresponding flow channel 210 in the low-temperature region is reduced, thereby reducing the flow of the cooling liquid and realizing the throttling of the cooling liquid. After throttling, the flow rate of the cooling liquid reaching the low-temperature region is reduced, so as to raise the temperature, and finally realize the temperature uniformity between the cell core and a cell core at high temperature.

In some embodiments, the cold expansion portion 300 is made of a foam material. It can be understood that the foam material has a good expansion effect and can block the flow channel 210, so that the flow rate of the cooling liquid can be adjusted according to the usage conditions of the cells, and the usage performances of the cells can be improved.

In some embodiments, a cold expansion coefficient of the cold expansion portion 300 is 100% to 500%. Therefore, the cold expansion portion 300 has a high cold expansion coefficient, so that the cold expansion portion 300 can be adjusted in a large thickness range, and the cold expansion portion 300 can block the flow channel 210 to adjust the flow rate of the cooling liquid in the corresponding flow channel 210.

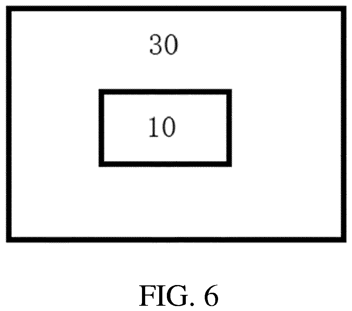

A power battery 30 according to an embodiment of the present disclosure includes, as shown in FIG. 6, the above box 10 of the power battery 30. In this way, since the power battery 30 is provided with the above box 10, the cold expansion portion 300 in the box 10 can expand according to the usage conditions of the cells, so that more cooling liquid flows in the flow channel 210 corresponding to the high temperature and less cooling liquid is provided for cooling at the low temperature. Thus, the usage environments of the cells are better, and the usage performance of the power battery 30 is higher.

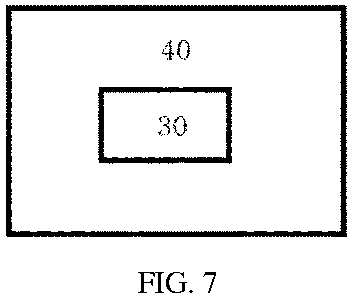

A power consuming device 40 according to an embodiment of the present disclosure includes, as shown in FIG. 7, the power battery 30 as shown above. The power battery 30 is configured to supply power to the power consuming device 40. In this way, the power battery 30 as shown above is arranged in the power consuming device 40, and the cold expansion portion 300 in the power battery 30 can adjust the flow rate of the cooling liquid according to the usage conditions of the cells, so that more cooling liquid is provided for heat dissipation of the cells at high temperature, and less cooling liquid is provided for heat dissipation of the cells at low temperature, thereby improving the usage performance of the whole cell, avoiding the discharge of the power battery 30 during use, and using the power consuming device 40 more safely and reliably.

As shown in FIG. 1, FIG. 2, and FIG. 4, a temperature difference self-adjusting cooling plate 20 according to an embodiment of the present disclosure is configured for thermal management of a power battery 30, including: a liquid cooling plate 200 and a cold expansion portion 300. An inner cavity 220 is formed in the liquid cooling plate 200. One side of the inner cavity 220 is open, and the open side is configured to connect a tray 100 of the power battery 30. The cold expansion portion 300 is fixed with the liquid cooling plate 200 in the inner cavity 220. The thickness of the cold expansion portion 300 is changeable with temperature in the presence of a temperature difference of the corresponding liquid cooling plate 200, so as to adjust the size of a cooling liquid passing space of a local region in the inner cavity 220. Therefore, the above cold expansion portion 300 is arranged on the temperature difference self-adjusting cooling plate 20. Since the cold expansion portion 300 can realize cold expansion and hot contraction, the flow rate of the corresponding cooling liquid can be adjusted according to the usage conditions of the cells, so that the usage environments of the cells are better, and the usage performance of the cells are improved.

The cold expansion portion 300 according to this embodiment of the present disclosure is a coating arranged on an inner top wall 222 of the inner cavity 220. In this way, the coating arranged on the inner top wall 222 not only facilitates the arrangement of the cold expansion portion 300 and improves the assembly efficiency, but also enables the cold expansion portion 300 to better control the liquid-passing cross-sectional area of the flow channel 210, so that the cooling liquid for cooling at the cells can be adjusted according to the usage temperatures of the cells, and the environmental temperatures of the cells is lower, thus prolonging the service lives of the cells and improving the usage performances of the cells.

In the description of the present disclosure, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial", "radial", and "circumferential" are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as limiting of the present disclosure.

In the description of the present disclosure, "first feature" and "second feature" may include one or more of the features. In the description of present the disclosure, "multiple" means two or more. In the description of the present disclosure, the first feature being "on" or "under" the second feature may include that the first and second features are in direct contact, or may include that the first and second features are not in direct contact but in contact by using other features therebetween. In the description of the present disclosure, the first feature being "on", "above", and "over" the second feature includes that the first feature is right above and on the inclined top of the second feature or merely indicates that a level of the first feature is higher than that of the second feature.

In the description of this specification, the description of the reference terms such as "an embodiment", "some embodiments", "exemplary embodiments", "example", "specific example", or "some examples" means that the specific features, structures, materials or characteristics described with reference to the embodiment or example are included in at least one embodiment or example of the present disclosure. In this specification, schematic representations of the above terms do not necessarily refer to the same embodiment or example.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A box (10) of a power battery (30), comprising:
a tray (100), an accommodating space (110) for accommodating cells being provided in the tray (100);
a liquid cooling plate (200), the liquid cooling plate (200) being connected to the tray (100) at an outer surface of at least one of the top and bottom of the tray (100), a flow channel (210) through which a cooling liquid flows being defined jointly by the liquid cooling plate (200) and the outer surface of the tray (100); and
a cold expansion portion (300), the cold expansion portion (300) being arranged in the flow channel (210), and connected to at least one of the tray (100) and the liquid cooling plate (200), a liquid-passing cross-sectional area of the flow channel (210) corresponding to an expansion region being reduced when the cold expansion portion (300) expands.

2. The box (10) of the power battery (30) according to claim 1, wherein an inner cavity (220) is formed in the liquid cooling plate (200); and the side of the inner cavity (220) facing the tray (100) is open, the surface of the tray (100) closes the open side of the inner cavity (220), a region (230) of the liquid cooling plate (200) not provided with the inner cavity (220) is connected to the surface of the tray (100), and the cold expansion portion (300) is connected to the inner cavity (220) of the liquid cooling plate (200).

3. The box (10) of the power battery (30) according to claim 1 or 2, wherein the cold expansion portion (300) is a coating printed or coated on the inner cavity (220) of the liquid cooling plate (200).

4. The box (10) of the power battery (30) according to any one of claims 1 to 3, wherein the inner cavity (220) of the liquid cooling plate (200) comprises an inner side wall (221) and an inner top wall (222) opposite to the tray (100), and the cold expansion portion (300) is at least arranged on the inner top wall (222).

5. The box (10) of the power battery (30) according to any one of claims 1 to 4, wherein when the cells are in a non-operating state, an initial thickness of the cold expansion portion (300) is 0.1 mm to 0.5 mm.

6. The box (10) of the power battery (30) according to any one of claims 1to 5, wherein a distribution area of the cold expansion portion (300) is 40% to 60% of an entire area of the liquid cooling plate (200).

7. The box (10) of the power battery (30) according to claim 5 or 6, wherein a volume variation of the cold expansion portion (300) is 1 to 10 times.

8. The box (10) of the power battery (30) according to any one of claims 1 to 7, wherein the cold expansion portion (300) is made of a foam material.

9. The box (10) of the power battery (30) according to any one of claims 1 to 8, wherein a cold expansion coefficient of the cold expansion portion (300) is 100% to 500%.

10. The box (10) of the power battery (30) according to any one of claims 1 to 9, wherein the tray (100) is an integral extrusion type structure, and the liquid cooling plate (200) is a stamped aluminum alloy plate.

11. A power battery (30), comprising a box (10) of a power battery (30) according to any one of claims 1 to 10.

12. A power consuming device (40), comprising a power battery (30) according to claim 11, the power battery (30) being configured to supply power to the power consuming device (40).

13. A temperature difference self-adjusting cooling plate (20), configured for thermal management of a power battery (30), comprising:
a liquid cooling plate (200), an inner cavity (220) being formed in the liquid cooling plate (200), one side of the inner cavity (220) being open, and the open side being configured to connect a tray (100) of the power battery (30); and
a cold expansion portion (300), the cold expansion portion (300) being fixed with the liquid cooling plate (200) in the inner cavity (220), and the thickness of the cold expansion portion (300) being changeable with temperature in the presence of a temperature difference of the corresponding liquid cooling plate (200), so as to adjust the size of a cooling liquid passing space of a local region in the inner cavity (220).

14. The temperature difference self-adjusting cooling plate (20) according to claim 13, wherein the cold expansion portion (300) is a coating arranged on an inner top wall (222) of the inner cavity (220).
